# EUROPEAN PATENT SPECIFICATION

(11) **EP 2 204 961 B1**
(45) Date of publication and mention of the grant of the patent: **16.01.2013**
(21) Application number: 10160614.3
(22) Date of filing: 22.11.2007
(51) Int. Cl.: H04L 29/06, H04N 7/173, H04L 29/08

(54) **Broadcast transmitting apparatus, method of transmitting broadcast data, broadcast receiver and method of receiving broadcast data**
Rundfunkübertragungsvorrichtung, Verfahren zum Übertragen von Rundfunkdaten, Rundfunkempfänger und Verfahren zum Empfang von Rundfunkdaten
Appareil de transmission de diffusion, procédé de transmission de données de diffusion, récepteur de diffusion et procédé de réception de données de diffusion

(30) Priority: 24.11.2006 US 860811 P; 14.12.2006 KR 20060127978
(43) Date of publication of application: 07.07.2010
(62) Divisional of application: 07121375.5
(73) Proprietor: LG Electronics Inc., Seoul 150-721 (KR)
(72) Inventor: Hong, Ho Taek, 137-724, Seoul (KR); Suh, Jong Yeul, 137-724, Seoul (KR); Lee, Yoon Ei, 137-724, Seoul (KR); Lee, Joon Hwi, 137-724, Seoul (KR); Kim, Jin Pil, 137-724, Seoul (KR)
(74) Representative: Cabinet Plasseraud

(56) References cited:
- US-A1- 2005 022 237
- US-A1- 2006 064 721
- US-A1- 2006 117 342

## Description

This application claims the benefit of US Provisional Application No. 60/860,811, filed on November 24, 2006, and Korean Patent Application No. 10-2006-0127978, filed on December 14, 2006.

### BACKGROUND OF THE INVENTION

### Field of the Disclosure

The present disclosure relates to a broadcast transmitting apparatus, method of transmitting broadcast data, broadcast receiver, and method of receiving broadcast data.

### Discussion of the Related Art

Existing television (TV) services have been provided in such a manner that contents produced by broadcasting companies are transmitted through radio transmission media, such as terrestrial waves, cables or satellites, and a viewer watches the transmitted contents through a TV receiver capable of receiving the transmitted contents via the respective transmission media. However, as digital TV technologies based on digital broadcasting are developed and are commercially available, breaking from existing analog broadcasting, various contents, such as real-time broadcasts, Contents on Demand (CoD), games and news, can be provided to a viewer using the Internet connected to each home, besides the existing transmission media. An Internet Protocol TV (IPTV) may be taken as an example of the provision of contents using the Internet. The IPTV refers to a service that provides information services, video contents, broadcasts, etc. to a TV using highspeed Internet.

This IPTV is similar to general cable broadcasting or satellite broadcasting in that it provides broadcast contents including videos, but has a feature in that it additionally has bidirectionality. Also, differently from general terrestrial broadcasting, cable broadcasting or satellite broadcasting, the IPTV enables a viewer to watch a desired program at his/her convenient time. For various services of this IPTV, detailed information, a connection location, service provider information, a service channel, etc. about each content can be provided using a contents guide service.

However, in the case of the contents guide service, even though information of the contents guide service is updated, the user cannot know whether the contents guide service information has been updated and cannot know the updated information of the contents guide service information, unless he/she personally requests and confirms the updated contents guide service information. US 2006/0064721 describes a method and apparatus for implementing a synchronized electronic program guide application. US 2005/022237 relates to Internet-based content acquisition using a program guide. US2006/117342 relates to a method of obtaining information required for a subscriber requesting a broadcasting channel in IPTV broadcasting.

### SUMMARY OF THE INVENTION

Accordingly, the present disclosure is directed to a broadcast transmitting apparatus, method of transmitting broadcast data, broadcast receiver, and method of receiving broadcast data that substantially obviate one or more problems due to limitations and disadvantages of the related art.

An object of the present disclosure is to provide a data transmitting method, transmitting apparatus, broadcast receiver, and broadcast receiving method which can provide updated information of a contents guide.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, a method of processing Broadband Content Guide Information in an Internet Protocol TeleVision receiver is provided as set out in claim 1.
In a related arrangement a method of transmitting broadcast data using an Internet Protocol (IP) network, comprises storing updated data of a contents guide in a contents guide server, transmitting updated information of the contents guide from the contents guide server to a service discovery and selection server if the contents guide data that is stored in the contents guide server is updated, and if the updated contents guide information is received, making a contents guide discovery record including the updated information and transmitting the contents guide discovery record from the service discovery and selection server to a receiver.

In another aspect of the present disclosure, a IPTV receiver for processing BCG information is provided as set out in claim 6. In a related arrangement an apparatus for transmitting broadcast data using an IP network, comprises a contents guide server for storing updated data of a contents guide and creating updated information of the contents guide if the contents guide data is updated, and a service discovery and selection server for, if the updated contents guide information is received from the contents guide server, making a contents guide discovery record including the updated information and transmitting the contents guide discovery record to a receiver in a multicast mode.

In another related configuration, a method of receiving broadcast data using an IP network, comprises joining a service discovery and selection data receiver group, receiving a contents guide discovery record packet including updated information of a contents guide, and parsing the received packet according to a service discovery and selection data transmission/reception protocol to extract the updated contents guide information from the received packet.

In yet another related configuration, a broadcast receiver using an IP network, comprises a network interface for receiving a contents guide discovery record packet including updated information of a contents guide, an IP manager for transmitting the received packet to a corresponding manager according to a protocol, a service discovery manager for parsing the contents guide discovery record packet received from the IP manager according to a service discovery and selection data transmission/reception protocol to extract the updated contents guide information from the received packet, and a controller for controlling a process of receiving the extracted updated contents guide information and displaying it on a screen.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a schematic view of a system according to one embodiment of the present disclosure which transmits updated contents guide information to a receiver;

FIG. 2A is a view showing contents guide data before being updated, according to one embodiment of the present disclosure, represented in an eXtensible Markup Language (XML) based on a TV anytime schema;

FIG. 2B is a view showing updated contents guide data according to one embodiment of the present disclosure, represented in the XML based on the TV anytime schema;

FIG. 3 is a view showing a BCG update table including updated contents guide information according to one embodiment of the present disclosure;

FIG. 4 is a view showing a BCG update table including updated contents guide information according to one embodiment of the present disclosure, represented in the XML;

FIG. 5 is a view showing a BCG discovery record including updated contents guide information according to one embodiment of the present disclosure;

FIG. 6 is a view showing a BCG discovery record including updated contents guide information according to one embodiment of the present disclosure, represented in the XML;

FIG. 7 is a block diagram showing the configuration of a receiver according to one embodiment of the present disclosure which receives and processes updated contents guide information; and

FIG. 8 is a flowchart illustrating a process of processing updated contents guide information, according to one embodiment of the present disclosure.

### DESCRIPTION OF SPECIFIC EMBODIMENTS

Reference will now be made in detail to the embodiments of the present disclosure, examples of which are illustrated in the accompanying drawings. In the following description of the present disclosure, a detailed description of known functions and configurations incorporated herein will be omitted when it may make the subject matter of the invention rather unclear.

An Internet Protocol TV (IPTV) system, which is one example of a system providing contents using the Internet, can be roughly divided into a server, a network, and a receiver.

The server of the IPTV system comprises several servers taking charge of various functions, such as a Service Discovery & Selection (SD&S) server, a streaming server, a Broadband Contents Guide (BCG) server, a customer information server and a payment information server. The streaming server can transmit video data encoded in MPEG2(Moving Picture Experts Group) or MPEG4 over the network using a Real-Time Transport Protocol (RTP), RTP Control Protocol (RTCP), etc. The streaming server can also control playback of a video stream to some degree through a function called Network Trick Play, including Pause, Replay, Stop, etc., using a Real-Time Streaming Protocol (RTSP), etc. The above protocols and encoding methods are examples and other protocols and encoding methods can be used according to the implementation. The BCG server stores BCG data and provides the stored BCG data to the receiver. The BCG server provides BCG information service which is one example of a contents guide service providing information about contents, etc. The BCG data includes information about a stream connection using the RTSP/RTP, and a direct connection to the streaming server may be made using this connection information. The SD&S server provides the receiver with connection information, playback information, etc. about servers providing services such as broadcasting, Video On Demand (VOD), game and BCG.

The network of the IPTV system comprises an Internet-based network, and gateways. The gateways can perform multicast group management using an Internet Group Management Protocol (IGMP), etc., Quality of Service (QoS) management and so forth, as well as general data transfer. The receiver of the IPTV system refers to a receiver capable of receiving data transmitted over the Internet-based network and providing the received data to the user. The receiver may be, for example, an IPTV settop, homenet gateway, or IPTV-embedded TV.

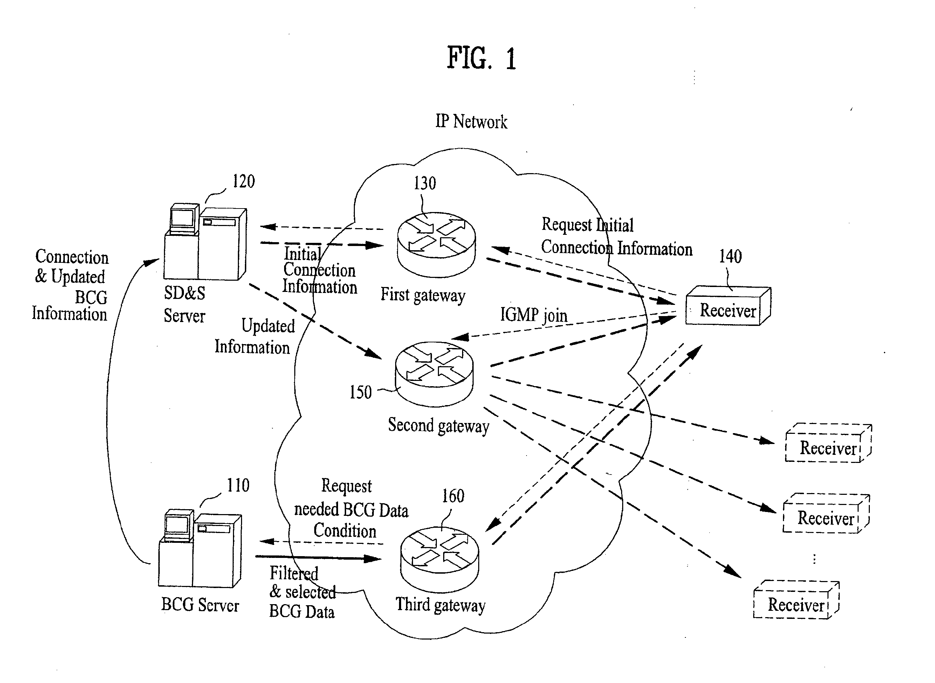

FIG. 1 is a schematic view of a system according to one embodiment of the present disclosure which transmits updated contents guide information to a receiver. This system comprises a BCG server 110, SD&S server 120, first gateway 130, receiver 140, second gateway 150, and third gateway 160.

The BCG server 110 acts to store contents guide data and provide the stored contents guide data to the receiver 140 in response to the user's request, etc. When there is a change in information about contents, the BCG server 110 updates the stored contents guide data and transmits updated contents guide information about the updated contents guide data to the SD&S server 120. The BCG server 110 can also transmit connection information to the SD&S server 120. The updated contents guide information comprises contents guide version information, information about updated contents, etc. However, the updated contents guide information may optionally comprises the information about the updated contents, etc., except the contents guide version information, among the above information. Upon receiving the updated contents guide information from the BCG server 110, the SD&S server 120 provides the received updated contents guide information to the receiver 140.

If the receiver 140 is booted, then it requests initial connection information of the SD&S server 120. The SD&S server 120 acts to provide connection information about various servers providing services, audio and video information of contents, etc. to the receiver 140. As a result, the receiver 140 can connect to the SD&S server 120 through the first gateway 130 to request initial connection information about various servers of the SD&S server 120 and receive the initial connection information from the SD&S server 120. The request and transmission of the initial connection information between the receiver 140 and the SD&S server 120 are based on a unicast mode. The first gateway 130 can support the unicast mode. The unicast mode is a mode where one sender transmits data to one recipient in a 1:1 manner. In the unicast mode, if a receiver requests data of a server, the server transmits the data to the receiver in response to the request.

The receiver 140 can join an SD&S group of the second gateway 150 using an Internet Group Management Protocol (IGMP) . A receiver having joined the SD&S group can receive connection information about various servers, etc. provided from the SD&S server 120 in a multicast mode. The second gateway 150 can support the multicast mode. The multicast mode is a mode where data is transmitted to a specific group of recipients. In this mode, a large amount of data can be transmitted to a plurality of receivers at one time.

For transmission of data in the multicast mode, the SD&S server 120 can form a multicast flow to multicast the data. One or more multicast flows can be formed and the number thereof may be different according to different embodiments. For example, for multicasting of data using one multicast flow, all desired data can be multicast through the one flow. For transmission of data using a plurality of multicast flows, the flows can be hierarchically divided, and data to be transmitted can be classified according to respective layers and the classified data can be multicast using the corresponding layers. For example, assume that data is transmitted to receivers using three multicast flows. The first one of the three multicast flows can be used to multicast data to be transmitted to all receivers, and the second flow can be used to multicast data to be transmitted to a group of receivers in a specific region. The third flow can be used to multicast data to be transmitted to a group of receivers in a subdivided sub-area of the above region. The types of data transmitted through the flows can be different according to different embodiments. For example, the first flow can transmit host name information of a server, etc., and the second flow can transmit system information, etc. The third flow can transmit various updated information or Emergency Alert System (EAS) information regarding a corresponding region. It should be noted here that the number and types of flows and the types of data transmitted through flows, as described above, may be different according to different embodiments.

The SD&S server 120 can periodically transmit connection information about various servers, etc. to the receiver 140 having joined the SD&S group in the multicast mode. The transmitted connection information also includes connection information about the BCG server 110. In the present disclosure, updated contents guide information can be transmitted to the receiver 140 together with the connection information about the BCG server 110. For example, the connection information about the BCG server 110 can be transmitted in a BCG discovery record to the receiver 140. In this record, connection information about the BCG server 110 is included. Therefore, in the present disclosure, the updated contents guide information received from the BCG server 110 can be transmitted in the BCG discovery record to the receiver 140 together with the connection information about the BCG server 110.

For provision of SD&S information, a DVB SD&S Transport Protocol (DVBSTP) can be used in the multicast mode and a HyperText Transport Protocol (HTTP) can be used in the unicast mode. Accordingly, when the SD&S server 120 transmits the BCG discovery record including the updated contents guide information in the multicast mode, it can use the DVBSTP.

The receiver 140 analyzes the updated contents guide information received in the BCG discovery record taken as the above example, etc., and recognizes whether the contents guide data stored in the BCG server 110 has been updated, version information, updated contents, etc. as a result of the analysis. The receiver 140 then displays whether the contents guide data stored in the BCG server 110 has been updated, updated contents, etc. through a display based on the received updated contents guide information to provide them to the user. In the case when only the contents guide version information among the update information is included in the updated contents guide information, and the updated contents guide information is transmitted to the SD&S server 120 from the BCG server 110, the receiver 140 can recognize only whether the contents guide data has been updated, from the version information. As a result, in this case, the receiver 140 can not provide the user with additional contents such as updated contents guide contents, except whether the contents guide data has been updated and the version information.

The user can confirm whether the contents guide data has been updated and request the updated contents guide data of the BCG server 110. The receiver 140 can connect to the BCG server 110 using the connection information included in the BCG discovery record taken as the above example, etc. and request the stored contents guide data of the BCG server 110. The request of the contents guide data can be carried out in the unicast mode.

The receiver 140 can request the contents guide data stored in the BCG server 110 through the third gateway 160 connected to the BCG server 110. The third gateway 160 can support the unicast mode. In the unicast mode, the receiver 140 can request updated contents guide data of the BCG server 110, and the BCG server 110 can transmit the requested contents guide data to the receiver 140. In the case where a query method is supported, the receiver 140 can selectively request and receive only desired contents guide data. Accordingly, the receiver 140 can selectively request and receive only updated contents among the stored contents guide data. At this time, for the data request, transmission, etc., a Simple Object Access Protocol (SOAP) or HyperText Transport Protocol (HTTP) can be used between the BCG server 110 and the receiver 140.

The BCG server 110, when there is a request for contents guide data from the receiver 140, provides the contents guide data to the receiver 140 requesting the data. In the case where only updated contents guide contents are selectively requested using a query mode, the BCG server 110 transmits only the selectively requested data among the contents guide data stored therein to the receiver 140.

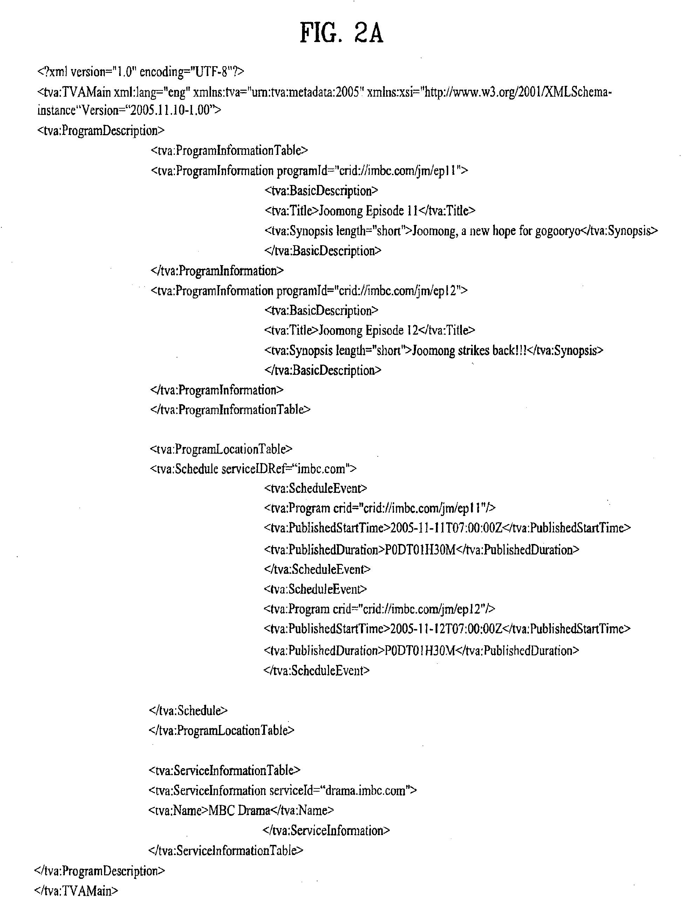

FIG. 2A shows contents guide data before being updated, according to one embodiment of the present disclosure, represented in an eXtensible Markup Language (XML) based on a TV anytime schema. This contents guide data includes information about an episode 11 and episode 12 of a content 'Joomong', etc. Content Reference IDs (CRIDs) of the respective episodes are indicated by 'crid://imbc.com/jm/ep11' and 'crid://imbc.com/im/ep12', respectively. The information about each episode includes a synopsis, a broadcast start time, a broadcast length, channel information, etc. of the corresponding episode.

Version information of the contents guide data is included in a 'TVAMain' element. Although the version information can be additionally provided within meta data such as ProgramDescription, it is included in a main element, 'TVAMain', which is a start position of the contents guide data, in the present embodiment. In the 'TVAMain' element of FIG. 2A is included the version information of the contents guide data like 'Version="2005.11.07-1.00"'.

Contents guide data, such as the synopsis, broadcast start time, broadcast length and channel information of each episode, is included in the ProgramDescription meta data. A program CRID, program title, synopsis, etc. are included in ProgramInformationTable in the ProgramDescription meta data. As shown in FIG. 2A, in the ProgramInformationTable are included a program CRID, program title, synopsis, etc. of each of the episode 11 and episode 12 of the content 'Joomong'. A service ID reference, a program CRID, a program start time, program time information, etc. are included in ProgramLocationTable in the ProgramDescription meta data. In FIG. 2A, in the ProgramLocationTable are included a service ID reference, a program CRID, a program start time, program time information, etc. of each of the episode 11 and episode 12 of the content 'Joomong'. Particularly, in association with the program start time, the episode 11 is described as being started at 07:00:00 on November 11, 2005, and the episode 12 is described as being started at 07:00:00 on November 12, 2005.

A service ID and a name thereof are included in ServiceInformationTable in the ProgramDescription meta data. In FIG. 2A, the ServiceInformationTable includes a service ID of a service provider providing the episode 11 and episode 12 of the content 'Joomong', a name 'MBC Drama', etc.

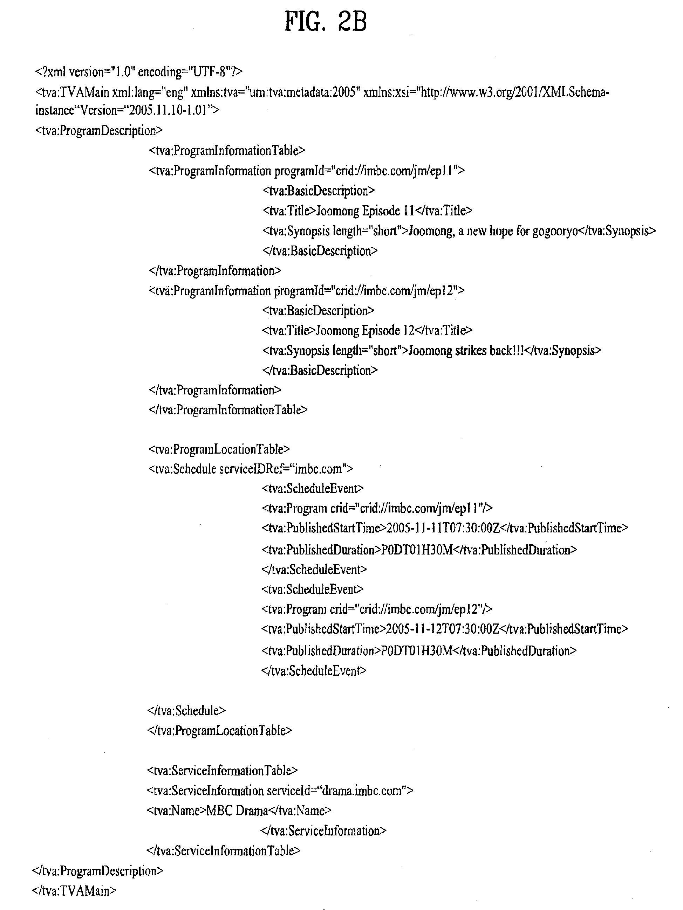

FIG. 2B shows updated contents guide data according to one embodiment of the present disclosure, represented in the XML based on the TV anytime schema. Assume that the program start time of each of the episode 11 and episode 12 of the content 'Joomong' was delayed 30 minutes. Information about the program start time is included in ProgramLocationTable, as in FIG. 2A.

A 'tva:PublishedStartTime' element in the ProgramLocationTable of FIG. 2B includes the program start time information. In FIG. 2B, the program start time of the episode 11 was changed to be started at 07:30:00 on November 11, 2005, and the program start time of the episode 12 was changed to be started at 07:30:00 on November 12, 2005. Also, because the contents guide data was updated due to the start time change of each episode, the contents guide version is changed. In FIG. 2B, the version information of the contents guide data was changed from '2005.11.07-1.00' to '2005.11.07-1.01'. If the contents guide data stored in the BCG server 110 is updated as in FIG. 2B, then the BCG server 110 transmits the updated information to the SD&S server 120.

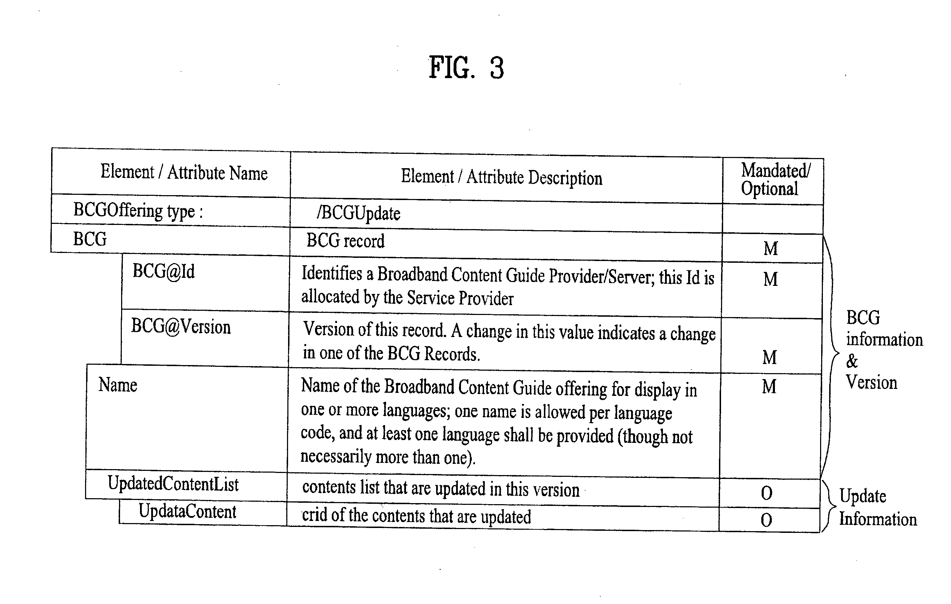

FIG. 3 shows a BCG update table including updated contents guide information according to one embodiment of the present disclosure. Although an existing table, etc. may be used in connection with the transmission of the updated contents guide information, the present disclosure proposes a separate BCG update table including the updated contents guide information. As described above, the BCG is one example of a contents guide. The name of the above table is one example, and other names can be used according to the implementation.

The BCG server 110 configures updated contents guide information in the form of the table of FIG. 3 and transmits the configured information to the SD&S server 120. Whenever the contents guide version is updated, updated contents guide information having a structure as shown in FIG. 3 is transmitted from the BCG server 110 to the SD&S server 120. For the transmission of the updated contents guide information, various protocols such as an HTTP and a File Transfer Protocol (FTP) can be used. The BCG update table of FIG. 3 includes contents guide version information, a list of updated contents, CRIDs of the updated contents, etc.

BCGOffering type is a BCGUpdate table. That is, updated BCG information is provided using the above table. 'BCG' refers to transmission of BCG information. 'BCG@Id' is an ID of a provider/server providing the BCG. This ID can be allocated by a service provider. 'BCG@Version' includes version information of the BCG. A change in this version information means that BCG data was updated. 'Name' records a name of the BCG. The BCG name can be provided in one or more languages. 'UpdatedContentList' includes information about a list of updated contents in an updated version. Contents updated in the BCG can be known from this list. 'UpdatedContent' includes information about CRIDs of the updated contents. In the BCGUpdate table, the information of the 'BCG', 'BCG@Id' and 'BCG@Version' is mandatory, but the information of the 'UpdatedContentList' and 'UpdatedContent' is optional.

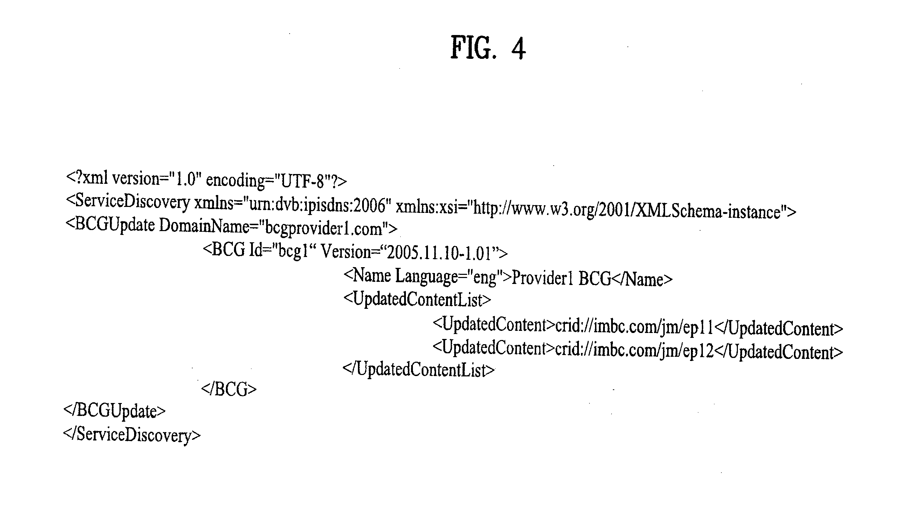

FIG. 4 shows a BCG update table including updated contents guide information according to one embodiment of the present invention, represented in the XML. The BCG update table of FIG. 4 includes the information where the contents guide is updated as shown in FIG. 2B, based on the table structure of FIG. 3.

Domain name information storing contents guide data, BCG ID, BCG Version, etc. can be seen from FIG. 4. The 'BCG Version' includes the version information '2005.11.07-1.01' of the BCG data changed as shown in FIG. 2B. A BCG name (Provider1 BCG) is included in 'Name'. Information about a list of updated contents and information about CRIDs of the updated contents are included in 'UpdatedContentList' and 'UpdatedContent', respectively. Here, the information of the 'UpdatedContentList' and 'UpdatedContent' is optionally included in the BCG update table of FIG. 4. The program start time of each of the episode 11 and episode 12 of the content 'Joomong' in the BCG data of FIG. 2B was delayed. As a result, CRID information 'crid://imbc.com/im/ep11' corresponding to the episode 11 of the content 'Joomong' and CRID information 'crid://imbc.com/im/ep12' corresponding to the episode 12 are included in the 'UpdatedContentList' and 'UpdatedContent' of FIG. 4.

If the SD&S server 120 receives the BCG update table as shown in FIG. 4, then it makes a BCG discovery record including the updated information that is included in the BCG update table and transmits the resulting BCG discovery record to the receiver 140.

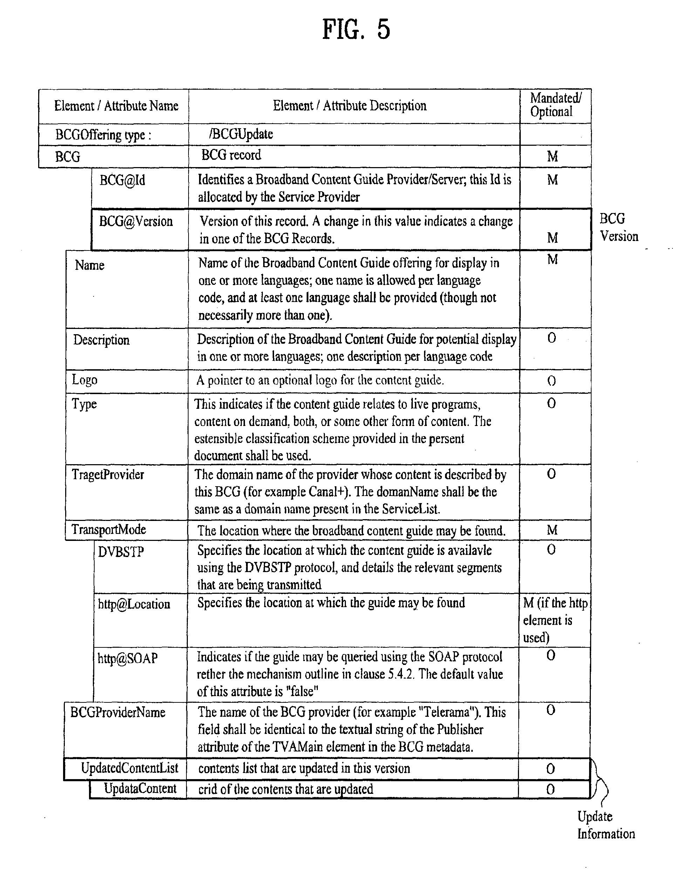

FIG. 5 shows a BCG discovery record including updated contents guide information according to one embodiment of the present disclosure. The BCG discovery record of FIG. 5 includes BCG version information, a list of updated contents, CRIDs of the updated contents, etc.

BCGOffering type is a BCGDiscovery record. 'BCG' refers to transmission of BCG information. 'BCG@Id' includes an ID of a provider/server providing the BCG. This ID can be allocated by a service provider. 'BCG@Version' includes version information of the BCG. A change in this version information means that BCG data was updated. 'Name' records a name of the BCG. The BCG name can be provided in one or more languages. 'Description' includes a description of the BCG. The description of the BCG can be provided in one or more languages. 'Logo' includes a pointer to a logo for the BCG. 'Type' includes information about the types of contents associated with the BCG. For example, the types of contents may be Live Program, Content on Demand (CoD) or others. 'TargetProvider' includes information about a domain name of a provider of a content described in the BCG.

'TransportMode' includes information about a location where BCG data may be found. 'DVBSTP' includes information about a location where the BCG is provided using a DVBSTP. 'http@Location' includes information about a location where the BCG is provided using an HTTP. 'http@SOAP' includes information about whether the BCG provided using the HTTP uses an SOAP. The default value of this attribute is 'false'. 'BCGProviderName' includes information about a name of a BCG provider. 'UpdatedContentList' includes information about a list of updated contents in an updated version. Contents updated in the BCG can be known from this list. 'UpdatedContent' includes information about CRIDs of the updated contents. In the BCG Discovery record, the information of the `BCG', 'BCG@Id', 'BCG@Version', 'Name' and 'TransportMode' is mandatory. Also, the information of the 'http@Location' is mandatory where an 'http' element is used. Other than these, the information of the 'Description', 'Logo', 'Type', 'TargetProvider', 'DVBSTP', 'http@SOAP', 'BCGProviderName', 'UpdatedContentList' and 'UpdatedContent' is optional.

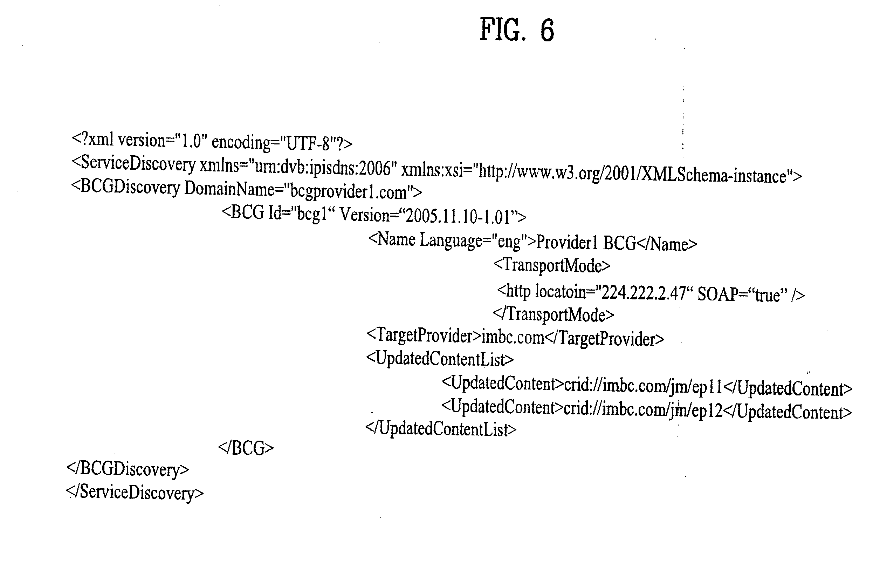

FIG. 6 a BCG discovery record including updated contents guide information according to one embodiment of the present disclosure, represented in the XML. Assume that the BCG update table including the updated information as shown in FIG. 4 is received from the BCG server 110.

Name information of a domain storing BCG data, BCG ID, BCG Version, etc. can be seen from FIG. 6. The 'BCG Version' includes the version information '2005.11.07-1.01' of the BCG data changed as shown in FIG. 2B. A BCG name (Provider1 BCG) is included in 'Name'. Information about a location where the BCG data may be found can be known from 'TransportMode'. An IP address '224.222.2.47' of a BCG provided using the HTTP is included in a lower element 'http location' of the 'TransportMode'. Also, it can be seen from 'SOAP="true"' that the BCG supports the SOAP. Domain name information 'imbc.com' of a provider of a content is included in 'TargetProvider'. Information about a list of updated contents and information about CRIDs of the updated contents are included in 'UpdatedContentList' and 'UpdatedContent', respectively. CRID information 'crid://imbc.com/im/ep11' corresponding to the episode 11 of the content 'Joomong' and CRID information 'crid://imbc.com/jm/ep12' corresponding to the episode 12 are included in the 'UpdatedContentList' and 'UpdatedContent' of FIG. 6.

The receiver 140 analyzes the BCG discovery record, etc. received from the SD&S server 120 and provides the updated contents guide information to the user as a result of the analysis.

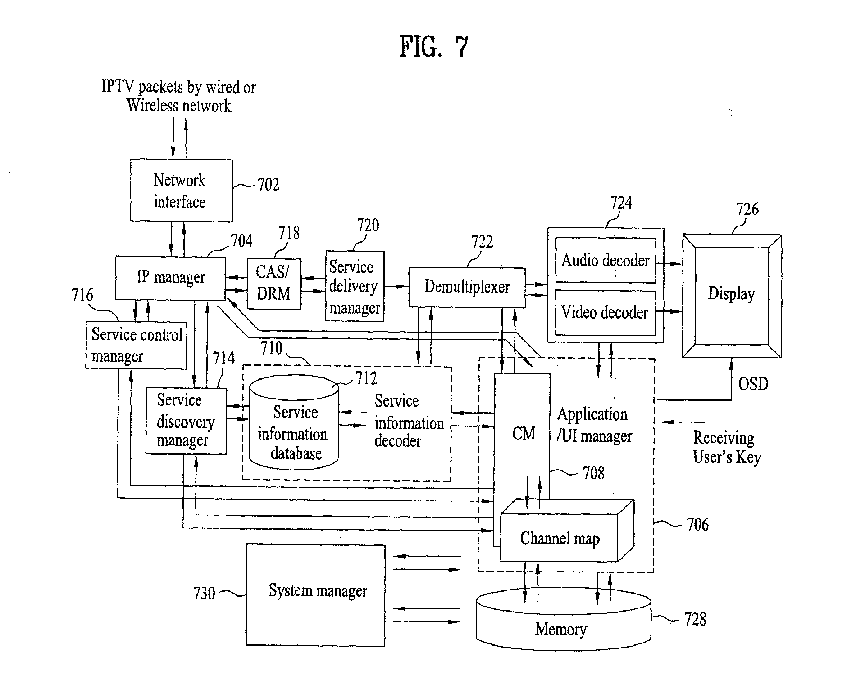

FIG. 7 is a block diagram showing the configuration of a receiver according to one embodiment of the present disclosure which receives and processes updated contents guide information. This receiver comprises a network interface 702, IP manager 704, application/UI manager 706, CM 708, service information decoder 710, service information database 712, service discovery manager 714, service control manager 716, CAS/DRM unit 718, service delivery manager 720, demultiplexer 722, audio/video decoder 724, display unit 726, memory 728, and system manager 730.

The network interface 702 receives packets from a network and transmits packets from the receiver to the network. The IP manager 704 engages in packet delivery from sources to destinations with respect to a packet which is received by the receiver and a packet which is transmitted by the receiver. Also, the IP manager 704 classifies received packets such that the received packets correspond to appropriate protocols. The application/UI manager 706 provides a Graphic User Interface (GUI) for the user using an On Screen Display (OSD), etc., and receives a key input from the user and performs an operation of the receiver based on the key input. For example, if the application/UI manager 706 receives a key input for channel selection from the user, then it transmits the received key input to the CM 708. The Channel Manager (CM) 708 creates a channel map. Also, the CM 708 can select a channel based on the key input received from the application/UI manager 706, and control the service discovery manager 714. The CM 708 can receive service information of the selected channel from the service information decoder 710 and perform setting of an audio/video Packet Identifier (PID) of the selected channel in the demultiplexer 722, etc. based on the received service information.

The service information decoder 710 decodes service information such as Program Specific Information (PSI). That is, the service information decoder 710 can receive and decode a PSI section, Program and Service Information Protocol (PSIP) section, DVB-Service Information (SI) section, etc. demultiplexed by the demultiplexer 722. The service information decoder 710 decodes the received sections to create a database regarding the service information, and stores the database regarding the service information in the service information database 712. The service discovery manager 714 provides information required for selection of a service provider. If the service discovery manager 714 receives a signal for channel selection from the application/UI manager 706, then it searches for a corresponding service using the above service information. The service control manager 716 takes charge of selection and control of a service. For example, the service control manager 716 can perform the service selection and control by using an IGMP or RTSP when the user selects a real-time Live Broadcasting service as in an existing broadcasting system, and by using the RTSP when the user selects a service such as Video On Demand (VOD). The RTSP can provide a trick mode for real-time streaming. The above protocols are examples and other protocols can be used according to the implementation.

A service-related packet received through the network interface 702 and IP manager 704 is transmitted to the CAS/DRM unit 718. The CAS/DRM unit 718 takes charge of Conditional Access System (CAS) and Digital Rights Management (DRM). The service delivery manager 720 takes charge of control of service data received. For example, the service delivery manager 720 can use a Real-Time Transport Protocol (RTP)/RTP Control Protocol (RTCP) for control of real-time streaming data. When the real-time streaming data is transmitted using the RTP, etc., the service delivery manager 720 delivers the received data packet to the demultiplexer 722 by parsing it according to the RTP. Also, the service delivery manager 720 can feed information received from the network back to a service providing server using the RTCP.

The demultiplexer 722 demultiplexes a received packet into audio data, video data, Program Specific Information (PSI) data, etc. and transmits the audio data, video data, PSI data, etc. to the video/audio decoder 724 and the service information decoder 710, respectively. The video/audio decoder 724 decodes the video data and audio data received from the demultiplexer 722. The video data decoded by the video/audio decoder 724 is provided to the user through the display unit 726 and the audio data decoded thereby is provided to the user through a speaker (not shown).

The memory 728 stores system setup data, etc. This memory 728 may be, for example, a NonVolatile RAM (NVRAM) or flash memory. The system manager 730 controls the entire operation of the receiver system through power.

The SD&S server 120 includes updated contents guide information in the BCG discovery record as shown in FIG. 6, etc. and transmits the resulting BCG discovery record to the receiver 140. The BCG discovery record transmitted from the SD&S server 120 is received through the network interface 702 of the receiver. A packet including the BCG discovery record received through the network interface 702 is transmitted to the IP manager 704. The IP manager 704 determines whether the destination of the received packet is the receiver and then transmits the packet to an appropriate manager block according to a transmission/reception protocol. The BCG discovery record is transmitted for provision of connection information, etc. of the BCG server 110 by the SD&S server 120. Therefore, the IP manager 704 can transmit the packet including the BCG discovery record to the service discovery manager 714.

The service discovery manager 714 manages connection information about servers providing various services, and others. The service discovery manager 714 can obtain the updated contents guide information from the BCG discovery record by parsing the BCG discovery record. Then, the service discovery manager 714 transmits the updated contents guide information to the application/UI manager 706. Upon receiving the updated contents guide information, the application/UI manager 706 can display the updated contents guide information through the display unit 726. The updated contents guide information can be displayed on the display unit 726 using an OSD, etc. A sound effect, etc. may be additionally provided along with the display.

If the user recognizes, through the display, etc., that contents guide data has been updated, then he/she can input a command requesting the updated contents guide data. If the request command is inputted, the application/UI manager 706 connects to the BCG server 110 through the service discovery manager 714. The receiver can connect to the BCG server 110 via the IP manager 704 and network interface 702 based on the BCG server 110 connection information of the service discovery manager 714 and request the contents guide data of the BCG server 110. The process of the receiver requesting data of the BCG server 110 and the process of the BCG server 110 transmitting the requested data to the receiver are the same as those previously described with reference to FIG. 1. In response to the request for the contents guide data, the BCG server 110 transmits the contents guide data stored therein to the receiver. In the case where the receiver selectively requests data using a query mode, the BCG server 110 transmits the selectively requested data to the receiver.

The receiver can receive a contents guide data packet transmitted from the BCG server 110 through the network interface 702. The received contents guide data packet can be transmitted to the application/UI manager 706 via the IP manager 704. The application/UI manager 706 stores and manages the received BCG data in the service information database 712. Also, the application/UI manager 706 can display the contents guide data stored in the service information database 712 on the display unit 726 in the form of, for example, an Electronic Program Guide (EPG). The contents guide data can be displayed on the display unit 726 using an OSD, etc. A sound effect, etc. may be additionally provided along with the display.

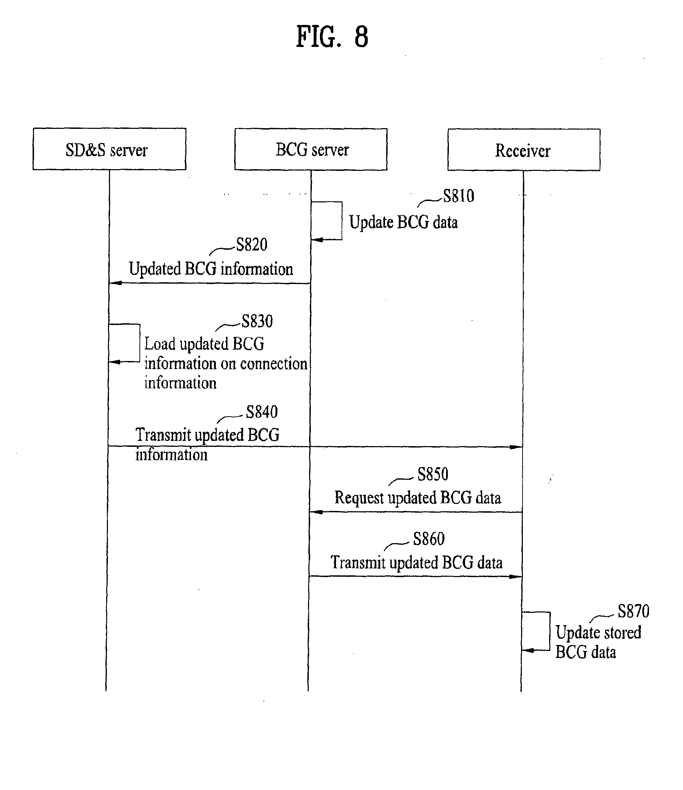

FIG. 8 is a flowchart illustrating a process of processing updated contents guide information, according to one embodiment of the present disclosure. This figure shows the flow and sequence of data among an SD&S server, a BCG server and a receiver.

The BCG server stores contents guide data. If the contents guide data stored in the BCG server is updated (S810), the BCG server transmits updated contents guide information to the SD&S server (S820). The updated contents guide information can comprise contents guide version information, updated contents, etc. If the SD&S server receives the updated contents guide information, then it loads the updated contents guide information in a record providing contents guide connection information, etc. (S830) and transmits the resulting record to the receiver (S840). For example, the SD&S server can load the updated contents guide information in a BCG discovery record and transmit the resulting BCG discovery record to the receiver. The receiver can be a receiver that pre-joined an SD&S server group using an IGMP, etc. to receive the updated contents guide information. Upon receiving the record including the updated contents guide information from the SD&S server, the receiver can notify the user of whether the contents guide data stored in the BCG server has been updated, using the updated information.

The user can confirm whether the contents guide data has been updated and request the updated contents guide data of the BCG server. If the user inputs a contents guide data request command, the receiver connects to the BCG server storing the updated contents guide data and requests the updated data of the BCG server (S850). In response to the data request from the receiver, the BCG server transmits the requested data to the receiver (S860). The data request and transmission between the receiver and the BCG server can be carried out in the unicast mode as stated previously with reference to FIG. 1. In the case where the query mode is supported, the receiver can selectively request and receive only an updated portion among the contents guide data.

The receiver analyzes the contents guide data transmitted from the BCG server and updates contents guide data stored therein with the transmitted contents guide data as a result of the analysis (S870). The receiver can display a contents guide based on the contents guide data stored therein on the screen to provide it to the user.

As apparent from the above description, the data transmitting method, transmitting apparatus, broadcast receiver, broadcast receiving method according to the present disclosure have effects as follows. According to the present disclosure, updated information of a contents guide can be received, so that updated data of the contents guide can be requested and received as needed, thus reducing burdens of a network and receiver. Further, the receiver can maintain the latest information about contents, so as to increase reliability of information.

It will be apparent to those skilled in the art that various modifications and variations can be made in the present disclosure without departing from the scope of the disclosures. Thus, it is intended that the present disclosure covers the modifications and variations of this disclosure provided they come within the scope of the appended claims and their equivalents.

## Claims

1. A method of processing Broadband Content Guide BCG, information in an IPTV, internet Protocol TeleVision, IPTV, receiver (140), the method comprising:
accessing a Service Discovery and Selection, SD&S, server (120);
receiving a BCG discovery record from the SD&S server (120), **characterized in that** the BCG discovery record includes location information at which the BCG information is able to be found and version information indicating a change in one of BCG information;
detecting the version information in the BCG discovery record;
requesting a changed segment on the BCG information to a BCG server (110) by using the location information if the version information is updated; and
receiving the changed segment on the BCG information from the BCG server (110) only if the version information is updated.

2. The method of claim 1, wherein the step of receiving the BCG discovery record performs in a multicast mode.

3. The method of claim 1, wherein the BCG discovery record includes at least one of information about a list updated contents and information about CRIDs of the updated contents.

4. An Internet Protocol TeleVision, IPTV, receiver (140) for processing Broadband Content Guide, BCG, information, comprising:
a network interface (702) configured to receive a BCG discovery record from a Service Discovery and Selection, SD&S, server (120), **characterized in that** the BCG discovery record includes location information at which the BCG information is able to be found and version information indicating a change in one of BCG information;
a service discovery manager (714) configured to detect the version information in the BCG discovery record; and
a controller (706) configured to control the network interface (702) to request a changed segment on the BCG information to a BCG server (110) by using the location information and to receive the changed segment on the BCG information from the BCG server (110) only if the version information is updated.

5. The IPTV receiver (140) of claim 4, wherein the network interface (702) receives the BCG discovery record in a multicast mode.

6. The IPTV receiver (140) of claim 4, wherein the BCG discovery record includes at least one of information about a list updated contents and information about CRIDs of the updated contents.

## Patentansprüche

1. Verfahren der Bearbeitung von Breitbandinhaltleit,BCG,Information in einem Internetprotokollfernseh,IPTV,Empfänger (140), wobei das Verfahren umfasst:
Zugreifen auf einen Service-Auffinde- und Wähl,SD&S,Server (120); Empfangen einer BCG-Auffindeaufzeichnung von dem SD&S-Server (120),
**dadurch gekennzeichnet, dass** die BCG-Auffindeaufzeichnung Ortsinformation enthält, an der die BCG-Information auffindbar ist,
sowie Versionsinformation, die eine Änderung in einer von BCG-Information anzeigt;
Detektieren der Versionsinformation in der BCG-Auffindeaufzeichnung;
Anfordern eines geänderten Segments an der BCG-Information zu einem BCG-Server (110) unter Verwendung der Ortsinformation, wenn die Versionsinformation aktualisiert ist; und
Empfangen des geänderten Segments an der BCG-Information von dem BCG-Server (110) nur, wenn die Versionsinformation aktualisiert ist.

2. Das Verfahren von Anspruch 1, worin der Schritt des Empfangens der BCG-Auffindeaufzeichnung in einem Multicastmodus erforlgt.

3. Das Verfahren von Anspruch 1, worin die BCG-Auffindeaufzeichnung Information über eine Liste von aktualisierten Inhalten und/oder Information über CRIDs von aktualisierten Inhalten enthält.

4. Internetprotokollfernseh,IPTV,Empfänger (140) zum Bearbeiten von Breitbandinhaltleit,BCG,Information, umfassend:
eine Netzwerkschnittstelle (702), die konfiguriert ist, um eine BCG-Auffindeaufzeichnung von einem Service-Auffinde- und Wähl, SD&S, Server (120) zu empfangen, **dadurch gekennzeichnet,**
**dass** die BCG-Auffindeaufzeichnung Ortsinformation enthält, an der die BCG-Information auffindbar ist, sowie Versionsinformation, die eine Änderung in einer von BCG-Information anzeigt;
einen Service-Auffindemanager (714), der konfiguriert ist, um die Versionsinformation in der BCG-Auffindeaufzeichnung zu erfassen; und
einen Controller (706), der konfiguriert ist, um die Netzwerkschnittstelle (702) so anzusteuern, dass sie ein geändertes Segment an der BCG-Information zu einem BCG-Server (110) unter Verwendung der Ortsinformation anfordert und das geänderte Segment an der BCG-Information von dem BCG-Server (110) nur empfängt, wenn die Versionsinformation aktualisiert ist.

5. Der IPTV-Empfänger (140) von Anspruch 4, worin die Netzwerkschnittstelle (702) eine BCG-Auffindeaufzeichnung in einem Multicastmodus empfängt.

6. Der IPTV-Empfänger (140) von Anspruch 4, worin die BCG-Auffindeaufzeichnung Information über eine Liste von aktualisierten Inhalten und/oder Information über CRIDs der aktualisierten Inhalte enthält.

## Revendications

1. Procédé de traitement d'informations de guide de contenus large bande, BCG, dans un récepteur de télévision par Internet, IPTV, (140), le procédé comprenant :
l'accès à un serveur de découverte et de sélection de services, SD&S (120) ;
la réception d'un enregistrement de découverte BCG à partir du serveur SD&S (120), **caractérisé en ce que** l'enregistrement de découverte BCG comprend des informations de localisation où les informations de guide BCG peuvent être trouvées, et des informations de version indiquant une modification de l'une des informations de guide BCG ;
la détection des informations de version dans l'enregistrement de découverte BCG;
la demande d'un segment modifié sur les informations de guide BCG, à un serveur BCG (110), en utilisant les informations de localisation si les informations de version sont mises à jour ; et
la réception du segment modifié sur les informations de guide BCG à partir du serveur BCG (110), uniquement si les informations de version sont mises à jour.

2. Procédé selon la revendication 1, dans lequel l'étape consistant à recevoir l'enregistrement de découverte BCG est mise en oeuvre dans un mode de multidiffusion.

3. Procédé selon la revendication 1, dans lequel l'enregistrement de découverte BCG inclut au moins l'une parmi des informations concernant une liste de contenus mis à jour et des informations concernant les identifications de référence de contenus, CRID, des contenus mis à jour.

4. Récepteur de télévision par Internet, IPTV, (140), destiné à traiter des informations de guide de contenus large bande, BCG, comprenant :
une interface de réseau (702) configurée de manière à recevoir un enregistrement de découverte BCG à partir d'un serveur de découverte et de sélection de services, SD&S (120), **caractérisé en ce que** l'enregistrement de découverte BCG comprend des informations de localisation où les informations de guide BCG peuvent être trouvées, et des informations de version indiquant une modification de l'une des informations de guide BCG ;
un gestionnaire de découverte de service (714) configuré de manière à détecter les informations de version dans l'enregistrement de découverte BCG ; et
un contrôleur (706) configuré de manière à commander à l'interface de réseau (702) de demander un segment modifié sur les informations de guide BCG, à un serveur BCG (110), en utilisant les informations de localisation, et à recevoir le segment modifié sur les informations de guide BCG à partir du serveur BCG (110), uniquement si les informations de version sont mises à jour.

5. Récepteur de télévision IPTV (140) selon la revendication 4, dans lequel l'interface de réseau (702) reçoit l'enregistrement de découverte BCG dans un mode de multidiffusion.

6. Récepteur de télévision IPTV (140) selon la revendication 4, dans lequel l'enregistrement de découverte BCG inclut au moins l'une parmi des informations concernant une liste de contenus mis à jour et des informations concernant les identifications de référence de contenus, CRID, des contenus mis à jour.
